(19) Europäisches Patentamt
European Patent Office
Office européen des brevets

(11) **EP 3 997 509 B1**

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **20742177.7**

(22) Anmeldetag: **06.07.2020**

(51) Internationale Patentklassifikation (IPC):
**G02B 27/09** *(2006.01)* **G02B 3/00** *(2006.01)*
**B82Y 10/00** *(2011.01)* **G02B 19/00** *(2006.01)*
**G02B 21/32** *(2006.01)* **G06N 10/00** *(2022.01)*
**B82Y 20/00** *(2011.01)*

(52) Gemeinsame Patentklassifikation (CPC):
**G02B 27/0905; G02B 19/0028; G02B 19/0047;**
**G02B 27/0955; G02B 27/0983; G06N 10/00;**
B82Y 10/00; B82Y 20/00; G02B 3/0087;
G02B 21/32

(86) Internationale Anmeldenummer:
**PCT/EP2020/068966**

(87) Internationale Veröffentlichungsnummer:
**WO 2021/004994 (14.01.2021 Gazette 2021/02)**

(54) **MEHRKANALIGE OPTOMECHANISCHE ADRESSIEREINHEIT**

MULTICHANNEL OPTOMECHANICAL ADDRESSING UNIT

UNITÉ D'ADRESSAGE OPTOMÉCANIQUE À MULTIPLES CANAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2019 DE 102019210041**

(43) Veröffentlichungstag der Anmeldung:
**18.05.2022 Patentblatt 2022/20**

(73) Patentinhaber: **Fraunhofer-Gesellschaft zur Förderung
der angewandten Forschung e.V.
80686 München (DE)**

(72) Erfinder:
• **WÄCHTER, Christoph
07745 Jena (DE)**
• **HÖFER, Bernd
07745 Jena (DE)**
• **SCHREIBER, Peter
07745 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**US-A- 6 044 096 US-A1- 2014 300 971
US-B1- 6 424 759**

**Beschreibung**

**Technisches Gebiet**

Die Erfindung betrifft eine Vorrichtung zum Abbilden eines objektseitigen Satzes von zueinander parallel verlaufenden Strahlbündeln auf eine Bildfläche.

**Hintergrund**

Es gibt Anwendungsfälle, in welchen Licht aus einer Vielzahl optischer Quellen, die durch mehrere optische Fasern bereitgestellt sein können, auf sehr kleine Gegenden in einer Bildebene gerichtet werden soll. Ein Bespiel dafür ist Quanten-Computing, wo die Lichtstrahlen auf Ionen gerichtet werden, die in geeigneten Ionenfallen befindlich sind. Der Ionenabstand liegt bei wenigen Mikrometern. Eine Wellenlänge des verwendeten Lichts hängt von den Spezifika der verwendeten Ionen ab und liegt in der Regel im Bereich von UV bis NIR. Die Abstände der Ionen in einer Falle hängen von verschiedenen Parametern ab. Deutliche Änderungen der Ionenabstände ergeben sich bei einer Beladung der Falle mit unterschiedlichen Ionenzahlen. Geringfügige Änderungen treten bspw. durch Störfelder in der Falle auf. Das Richten der Strahlen auf Gegenden in der Ionenfallenebene sollte deshalb variabel einstellbar sein, und das bei gleichzeitiger hochpräziser Nachführbarkeit der Fokusposition.

Ähnliche Problemstellungen treten aber auch bei anderen Technikgebieten auf, wie z.B. bei der optischen Datenkommunikation.

Eine einfache Variante der Adressierung von unterschiedlichen Ionen besteht in der Verwendung einer einzelnen Quelle und einer sequentiellen Adressierung der einzelnen Ionen, wie sie beschrieben ist bei: Crain, S. et al., "Individual addressing of trapped 171Yb+ ion qubits using a microelectromechanical systems-based beam steering system," Applied Physics Letters, pp. 181115, 1-4, 2014. Bei wachsenden Ionenzahlen wird der sequentielle Betrieb jedoch zum Engpass für das schnelle Ausführen von Qubit-Operationen an verschiedenen Ionenpositionen. Des Weiteren führt die Erweiterung des Schemas zu größeren Ionenzahlen zu einer Vergrößerung der Zwischenbildebene, wie ebenfalls bei Crain, S. et al., bzw. Knoernschild, C. et al., "MEMS-based optical beam steering system for quantum information processing in two-dimensional atomic systems," Optics Letters, pp. 273-275, 2008. beschrieben, und damit zu wachsenden Ansprüchen an die nachfolgende abbildende Optik.

Mit MEMS-Spiegel-Arrays können Positionen mehrkanaliger Eingänge Zielpositionen in einer Empfängerebene zugeordnet werden. In Faserschalteraufbauten werden für die zu realisierenden 1:1 Abbildungen in den eingangs- und ausgangsseitigen Kanälen typischerweise Kollimations- und identische Fokussierlinsen verwendet. Dabei bewirkten Spiegelarrays, dass für beliebige Eingangs- zu Ausgangszuordnungen das Bündel ausgangsseitig eine entsprechende Kanalposition mittig und senkrecht trifft. Das bedarf einer vorgegebenen, fixierten Positionierung der ausgangsseitigen Spiegel entsprechend einer fixen Anordnung der Ausgangskanäle. Folglich sind variable Positionen von Ausgangskanälen daher schwerlich erzielbar mit derartigen Aufbauten.

Ausgehend von festen eingangsseitigen Quellpositionen in einem Faserarray kann ein MEMS-Spiegel-Array in Verbindung mit nachgeordneten optischen Elementen zur Adressierung von Ionenpositionen verwendet werden, ohne dass eine Zwischenabbildung Verwendung findet; vergleiche bei Rickert, J., "Simultaneous and individual ion addressing for quantum information processing," Leopold-Franzens-Universität Innsbruck, Institute of Experimental Physics, 2018. Dabei wird ein von der Faser ausgehendes kollimiertes Bündel aufgeweitet. Das nachfolgende Objektiv transformiert das Bündel in seiner Fokalebene in eine den Anforderungen der Abbildungsaufgabe angepasste Gaußtaille. Eine Quellposition außerhalb einer optischen Achse ebenso wie eine Neigung zu der optischen Achse, die eine gewünschte Positionsverschiebung in der Fokalebene realisiert, führt aber zu Einbußen in der Transmission, wenn die Optiken nicht weit geöffnet sind. Damit sind Ansätze, bei denen ein Optikdurchmesser per se mit der Kanalzahl skaliert werden muss, nicht geeignet, da die Kanalzahl so von vornherein beschränkt bleibt, wenn die Größe einer optischen Vorrichtung begrenzt ist.

Weitere Ansätze sind bspw. aus der US 2014/300971 A1 bekannt. Die US 2014/300971 A1 befasst sich mit Vorrichtungen und Verfahren zum Aufrechterhalten der Helligkeit von Laseremitterbalkenausgängen mit mehreren Emittern zum Koppeln und für andere Anwendungen. In einigen Ausführungsformen kann mindestens eine Optik zur Verbesserung der Helligkeit in Kombination mit einer Optik zur Strahlneuformatierung verwendet werden.

Die US 6 044 096 A befasst sich mit einem System und Verfahren zum Betreiben einer Hochleistungs-Laserdiodenvorrichtung mit Kopplung eines Laserdiodenbarrens. Der Laserdiodenbarren und eine Mikrozylinderlinse sind in einem Gerätepaket vertikal ausgerichtet, so dass die Arrayachse des Laserbarrens und die Längsachse der Mikrozylinderlinse im Wesentlichen parallel zu einem Schwerkraftvektor ausgerichtet sind. In den zwei verschiedenen offenbarten Ausführungsformen findet entweder eine anfängliche Kollimation der Fast-Axis-Divergenz oder alternativ eine anfängliche Kollimation sowohl der Fast-Axis- als auch der Slow-Axis-Divergenzen vor der Strahlneuformatierung über einen Strahlarray-Drehspiegel statt. Außerdem wird die vertikale Ausrichtung dieser Komponenten mit Verfahren zum Kompensieren der Biegung oder des "Lächelns" des Laserdiodenbarrens kombiniert, um eine optimale Ausgangsstrahlkopplung bereitzustellen, was zu einer gleichförmigen Fernfeldintensitätsverteilung führt.

Die US 6424759 B1 befasst sich mit einer mechanisch betätigten optischen MxN-Schaltmatrix umfassend mehrere optische Reflektoren, die in einem Array angeordnet sind, das mehrere Spalten und Reihen umfasst, von denen zumindest einige zwischen ihren Ein- und Aus-Positionen beweglich sind, sowie mehrere primäre optische Ports und mehrere sekundäre optische Anschlüsse. Mehr als ein optischer Reflektor kann gleichzeitig eingeschaltet werden, um optische Signalkanäle zwischen jeweiligen primären und sekundären optischen Ports aufzubauen.

Eine Aufgabe der Erfindung ist es demnach, eine eine optische Vorrichtung zum Abbilden eines ersten, objektseitigen Satzes von zueinander parallel verlaufenden Strahlbündeln auf eine Bildfläche zu schaffen, sodass eine Einstellbarkeit der Orte in der Bildfläche, auf die die Abbildung geschieht, leichter, falls gewünscht auch in Form einer Verstellbarkeit durch besipielsweise mechanische Komponenten, und/oder in einer Form, die eine leichtere Skalierbarkeit auf eine höhere Anzahl von Strahlbündeln, realisierbar ist.

Eine Lösung der Aufgabe gelingt mit einer optischen Vorrichtung gemäß Anspruch 1.

Ein Kerngedanke der vorliegenden Erfindung besteht darin, dass ein hinsichtlich Abbildungsorten und/oder Strahlbündelanzahl effektiveres Konzept zum Abbilden eines ersten, objektseitigen Satzes von Strahlbündeln auf eine Bildfläche erzielbar ist, wenn die Strahlenbündel eingangsseitig parallel verlaufend bereitgestellt werden und eine Umordnung der Strahlbündel unter Beibehaltung der Parallelität noch vor der Strahlaufweitung mit anschließender Abbildungsoptik geschieht, und wenn der Übergang zwischen den umgeordneten Strahlbündeln zu der Strahlaufweitung über eine optisches Element erfolgt, dass die umgeordneten Strahlbündel durch Bündelung auf die Strahlaufweitungsoptik richtet, also durch eine gegenseitige Überlagerung, so dass die Strahlaufweitungsoptik mit anschließender Abbildungsoptik in einer Form implementierbar sind, die im Wesentlichen von einer Anzahl und/oder einer Umordnung der Strahlbündel unabhängig ist. Das mündet in eine optische Vorrichtung zum Abbilden eines ersten, objektseitigen Satzes von zueinander parallel verlaufenden Strahlbündeln, beispielsweise jeweils aus einem Glasfaserende stammend, auf eine Bildfläche, beispielsweise mit einer Strahlaufweitungsoptik; einer optische Umordnungseinheit, die ausgebildet ist, den ersten Satz von zueinander parallelen Strahlbündeln unter Beibehaltung der Parallelität zueinander umzuordnen, um einen zweiten Satz von zueinander parallelen Strahlbündeln zu erhalten; einem optischen Element, das ausgebildet ist, den zweiten Satz von einem oder mehreren Strahlbündeln durch Bündelung auf die Strahlaufweitungsoptik zu richten, so dass die Strahlaufweitungsoptik von einem dritten Satz von Strahlbündeln erreicht wird, wobei die Strahlaufweitungsoptik ausgebildet ist, jedes Strahlbündel des dritten Satzes aufzuweiten, um einen vierten Satz von aufgeweiteten Strahlbündeln zu erhalten; und einer Abbildungsoptik, z.B. ein Objektiv, die ausgebildet ist, den vierten Satz von aufgeweiteten Strahlbündeln auf eine Bildfläche bzw. eine Bildebene abzubilden.

In anderen Worten ausgedrückt ermöglichen Ausführungsbeispiele die Erzielung einer hochpräzisen optischen Zuordnung von einer Vielzahl von eingangsseitigen Lichtquellpunkten zu ausgangsseitigen Zielpunkten, wobei Ziel- und oder Endpunkte, die im Wesentlichen in jeweils einer Ebene angeordnet sein können, in dieser, d.h. also in transversaler Richtung, nicht notwendig ortsfest sind und die Abstandsverhältnisse von Quell- und Zielpunkten eine deutlich abstandsvergrößernde oder abstandsverkleinernde Abbildung erfordern können.

Beispielsweise kann für jeden Kanal eingangsseitig mit einem Kollimator, beispielsweise einer Sammellinse ein in strahlenoptischem Sinne schwach konvergentes bzw. schwach divergentes Bündel-erzeugt werden. Der Kollimator fängt beispielsweise stark divergentes Licht einer optischen Quelle ein und erzeugt einen Strahl mit reduzierter Divergenz. In den Kanälen entstehen so gegenseitig parallele Strahlbündel mit geringer Divergenz.

Diese Strahlbündel können über eine geeignete Umlenkeinrichtung individuell so umgelenkt werden, dass sie, als Mehrzahl von zueinander parallelen schwach divergenten Bündeln, auf ein abbildendes optisches Element, wie z.B. eine Sammellinse oder einen Parabolspiegel, treffen.

Für diese Mehrzahl an weitgehend parallelen schwach konvergenten bzw. schwach divergenten Bündeln ergeben sich beispielsweise durch individuelle Auftrefforte auf dem abbildenden optischen Element verschiedene Ausfallswinkel der Bündel, sodass diese sich in einer Fokalebene des optischen Elements weitgehend überlagern, wie zum Beispiel in einer in der Fokaleben liegenden Scheibe, wobei die Bündel ihre Nicht-Kollimiertheit bzw. Konvergenz bzw. Divergenz auch im strahlenoptischen Sinn durch das abbildende optische Element nicht verlieren, sondern in der Fokalebene ihren Bündelcharakter beibehalten und nicht jeweils in einem Punkt zusammenfallen.

Mit einer Strahlaufweitungsoptik, die beispielsweise als Teleskop ausgeführt wird, können die Bündelquerschnitte aufgeweitet werden. Eingangsseitig sollte die Strahlaufweitungsoptik eine Größe haben, die wenigstens dem 1,5-fachen der übereinanderfallenden Bündeldurchmesser entspricht. Ausgangsseitig kann die Größe der Strahlaufweitungsoptik zum einen minimiert werden durch ihre Ausrichtung entsprechend einer optischen Achse, die sich durch die Ausbreitungsrichtung eines zentralen Bündels nach dem abbildenden optischen Element ergibt, und zum anderen durch ihren Abstand vom abbildenden optischen Element, der sich im Falle eines Teleskops zur Strahlaufweitung aus der Brennweite des abbildenden optischen Elements und der Brennweite einer eingangsseitigen Linse im Teleskop ergibt. Dabei kann der aus dem Abstand der Quellpunkte untereinander und dem Abstand der Zielpunkte untereinander - bei nicht äquidistanten Abständen jeweils angepassten Mittelwerten - resultierende notwendige Vergrößerungsmaßstab über die Verhältnisse von Objektivbrennweite und Brennweite des abbildenden optischen Elements sowie über einen Vergrößerungsfaktor der Strahlaufweitung eingestellt, und gleichzeitig der ausgangsseitig an der Strahlaufweitungsoptik bzw. eingangsseitig am Objektiv vorliegende Bündeldurchmesser durch die Anpassung der Divergenz der Eingangsbündel an die gegebenen Erfordernisse angepasst werden.

Ferner ist die optische Umordnungseinheit steuerbar, um eine Umordnung des zweiten Satzes von Strahlbündeln - hinsichtlich einer lateralen Anordnung von Strahlbündeln - gegenüber dem ersten Satz von Strahlbündeln einzustellen. Dadurch können einzelne Strahlbündel überlagert werden sowie aus ihrer ursprünglichen Position verschoben werden, beispielsweise um eine besonders dichte Anordnung von Strahlbündeln zu erreichen oder um die ursprünglichen Strahlbündel in einem definierten Abstand voneinander anzuordnen. In anderen Worten ausgedrückt ordnet die Umordnungseinheit die eintreffenden Strahlbündel unter Beibehaltung der gegenseitigen Parallelität um, so dass jedes ausgangsseitige zweite Strahlenbündel eineindeutig einem der eintreffenden ersten Strahlenbündel zugeordnet sind, und so dass die laterale relative Anordnung der Strahlbündel zueinander sich zwischen dem ersten Satz von Strahlbündel und dem zweiten Satz ändert.

Darüber hinaus weist die optische Umordnungseinheit der optischen Vorrichtung mechanisch verstellbare Spiegel auf. Damit kann die Vorrichtung einfach herzustellen und aufzubauen sein.

Weitere Ausführungsbeispiele und weitere vorteilhafte Aspekte der optischen Vorrichtung sind in den jeweils abhängigen Patentansprüchen genannt. Die im folgenden diskutierten Effekte und Vorteile der Merkmale der Ausführungsbeispiele treffen im gleichen Maße auf einzelne Gruppen von optischen Elementen der optischen Vorrichtung, wie auf die optische Vorrichtung als Ganzes zu und sind untereinander austauschbar und/oder miteinander verknüpfbar.

Vorteilhafter Weise umfasst die optische Vorrichtung eine Quelle für jedes Strahlbündel des ersten Satzes von Strahlbündeln, aus der das jeweilige Strahlbündel auf die optische Umordnungseinheit trifft.

Bevorzugt werden Monomodefasern als Quelle eines Strahlbündels verwendet. Allerdings können im Sinne anderer Ausführungsbeispiele Multimodequellen verwendet werden, obgleich dann auch laterale Dimensionen für eine Kollimation deutlich größer werden. Beispielsweise kann als Kollimator für eine Monomodefaser eine Gradientenindex-Linse verwendet werden.

Bei noch einem weiteren bevorzugten Ausführungsbeispiel umfasst die optische Vorrichtung zum Erzeugen schwach konvergenter oder divergenter Strahlbündel einen Kollimator für jedes Strahlbündel des ersten Satzes von Strahlbündeln, durch das das jeweilige Strahlbündel in Richtung der optischen Umordnungseinheit tritt. Eine Kollimationslinse fängt die stark divergierende Laserleistung, beispielsweise von einer optischen Faser ein und erzeugt einen Strahl mit reduzierter Divergenz, was wiederum moderate Ausbreitungsstrecken ermöglicht.

Vorteilhafterweise ist das optische Element der optischen Vorrichtung ausgebildet, parallel zu dem zweiten Satz von Strahlbündeln einfallendes Licht auf einen Punkt in, oder um einen Abstand kleiner als einem zweifachen einer Brennweite eines eingangsseitigen optischen Elements der Strahlaufweitungsoptik vor oder nach, dem eingangsseitigen optischen Element zu bündeln. Dabei überlagern sich die Strahlbündel des dritten Satzes von Strahlbündeln aufgrund ihrer noch bestehenden Konvergenz bzw. Divergenz an dem Punkt in einem vorbestimmten Bereich, wie z.B. einem Kreis. In anderen Worten ausgedrückt behalten die in dem vorbestimmten Bereich in der Fokalebene sich gegenseitig überlagernden Bündel wegen ihrer Konvergenz bzw. Divergenz auch im strahlenoptischen Sinn Bündelcharakter und fallen nicht jeweils in einem Punkt zusammen. Jedes Bündel, das das optische Element durchlaufen hat, um sich mit den anderen zu überlagern, ist vorzugsweise schwach divergent und trifft so auf die Strahlaufweitungsoptik. Die in verschiedenen Abständen zur Achse und parallel zueinander auf das optische Element zulaufenden Strahlenbündel werden durch das optische Element abgelenkt und überlagern sich in der Brennweite des optischen Elements. Die ursprüngliche Positionen/Orientierungen, also verschiedene transversale Orte und gleicher Winkel - achsenparalleler Strahlbündel - werden durch das optische Element also in einen Satz von Bündeln übertragen, die an der Fokalebene des optischen Elements gleichen Ort aufweisen, aber sich hinsichtlich ihrer Winkel bzw. Richtungen unterscheiden.

Die Quellen der Strahlbündel können ein- oder auch zweidimensional angeordnet sein und die Umordnung kann ein- oder zwei-dimensional gestaltet werden.

Bei einem besonders bevorzugten Ausführungsbeispiel beträgt der vorerwähnte Abstand der Fokaleben des optischen Elements, an welchem die Überlagerung stattfindet, zwischen einem 0,5- und einem 1,5-fachen der Brennweite des eingangsseitigen optischen Elements.

Bei einem noch bevorzugteren Ausführungsbeispiel beträgt der Abstand zwischen 0,5 und 1,5 mal $f_{T1} + \Delta$, mit

$$\Delta = \frac{f_{T1}}{f_{T2}}(f_{T1} + f_{T2}) - f_{T1} = f_{T1}^2 / f_{T2}$$

wobei $f_{T1}$ die Brennweite des eingangsseitigen optischen Elements und $f_{T2}$ die Brennweite des ausgangsseitigen optischen Elements der Strahlaufweitungsoptik ist, die zusammen ein Teleskop bilden.

Mit der vorerwähnten Überlagerung der Bündel vor dem eingangsseitigen optischen Element der Strahlaufweitungsoptik ergibt sich eine effektive Überlagerung der Ausleuchtung des ausgangsseitigen optischen Elements mit der damit verbundenen Möglichkeit letzteres auch bei großer Strahlbündelanzahl klein zu gestalten.

Gemäß einem vorteilhaften Ausführungsbeispiel weist die Abbildungsoptik einen Durchmesser auf, der größer oder gleich einem 1,5-fachen eines Querschnitts eines Strahlbündels des vierten Satzes von Strahlbündeln an dem Punkt ist. An dieser Stelle ist eine perfekte Überlagerung von Gauß-Bündeln möglich.

Eine einfache und kostengünstige Bauweise gemäß einem vorteilhaften Ausführungsbeispiel sieht vor, dass das optische Element als ein- oder mehrstufige refraktive Optik ausgeführt ist.

Eine besonders kompakte Bauweise gemäß einem vorteilhaften Ausführungsbeispiel sieht vor, dass das optische Element als reflektive Optik, vorzugsweise als Parabolspiegel, ausgeführt ist.

Zum einfachen Verstellen bzw. Einstellen der-mechanisch verstellbaren Spiegel, umfasst die optische Vorrichtung gemäß einem Ausführungsbeispiel Lagerungen, beispielsweise Federgelenke oder Loslager, über die die mechanisch verstellbaren Spiegel linear beweglich sind, wie z.B. parallel zu den eintreffenden Strahlbündeln. Mittels Linearbewegungen lassen sich Strahlbündel unter Beibehaltung ihrer gegenseitigen Parallelität umordnen. Dadurch können ursprünglich starre Positionen der von der Quelle $Y_i^{Quell}$ ausgehenden achsparallelen Strahlbündel, die an verschiedenen räumlichen Positionen lokalisiert sind, parallel zueinander verschoben werden.

Um eine möglichst genaue Umordnung bzw. Ausrichtung von Strahlbündeln zu gewährleisten, kann die optische Umordnungseinheit mechanische und/oder piezoelektrische und/oder magnetisch ansteuerbare Stellelemente, beispielsweise für die Linearbewegung der Spiegel, aufweisen. Mit solchen Stellelementen lässt sich eine hochpräzise Steuerung der Strahlbündel erzielen.

Zweckmäßigerweise ist die optische Umordnungseinheit der optischen Vorrichtung ausgebildet, die Umordnung weglängenerhaltend zu erzielen, so dass jedes Strahlbündel des ersten Satzes von Strahlbündeln bei einem Durchlaufen der optischen Umordnungseinheit, um ein Strahlbündel des zweiten Satzes von Strahlbündeln zu werden, eine Wegstrecke zurücklegt, die unabhängig von einer Einstellung der Umordnung ist bzw. unabhängig von einer Position der Strahlbündels nach seiner Umordnung ist. Damit werden weglängenabhängige Änderungen der Bündel vermieden. Sie treffen demnach unabhängig von der gewählten bzw. eingestellten Umordnung mit gleichem Durchmesser bzw. Taillenlage auf das optische Element.

Gemäß einem vorteilhaften Ausführungsbeispiel weist die optische Umordnungseinheit einen entlang eines Strahlengangs der optischen Vorrichtung hinter den verstellbaren Spiegeln angeordneten starren Spiegel auf. Die Anordnung kann so sein, dass der Umlenkwinkel jeweils 90° beträgt, bei starrem Spiegel und verstellbaren Spiegeln Die Anordnung eines solchen Spiegels ist dann besonders vorteilhaft, wenn sämtliche Strahlbündel, nach Verlassen der verstellbaren Spiegel, in der gleichen Art und Weise umgelenkt werden.

Gemäß noch einem vorteilhaften Ausführungsbeispiel ist die optische Umordnungseinheit ausgebildet, den ersten Satz von zu der Strahlrichtung parallelen Strahlbündeln unter Beibehaltung der Parallelität zueinander und zu der Strahlrichtung so umzuordnen, dass der zweite Satz von Strahlbündeln ebenfalls zu der Strahlrichtung, also zu dem ersten Satz von Bündeln, parallel ist. Eine Beibehaltung der Parallelität ist im Hinblick auf ein Auftreffen auf ein reflektives bzw. refraktives optisches Element, zur im Wesentlichen gleichmäßigen Änderung der Eigenschaften bzw. Aus-Richtung des Strahlbündels besonders dienlich.

Gemäß einem Ausführungsbeispiel ist die Strahlaufweitungsoptik als refraktives Teleskop ausgeführt.

Gemäß einem weiteren bevorzugten Ausführungsbeispiel ist die Strahlaufweitungsoptik als reflektives Teleskop ausgeführt. Eine optische Vorrichtung, die sich eines solchen reflektiven Teleskops bedient, vermeidet chromatische Aberrationen innerhalb der Strahlaufweitungsoptik.

Bei einem Ausführungsbeispiel der optischen Vorrichtung weisen die Strahlbündel des ersten Satzes monochromatisches Licht hoher Intensität auf. Monochromatisches Licht erlaubt eine genaue Messung bzw. Lokalisation von Gegenständen in einer Bildebene, da die Eigenschaften einzelner Strahlbündel, die mittels verschiedener optischer Elemente der optischen Vorrichtung gelenkt werden, im Wesentlichen gleich bleiben und damit auf die gleiche Art und Weise gesteuert werden können.

### Figurenkurzbeschreibung

Einige Ausführungsbeispiele sind exemplarisch in der Zeichnung dargestellt und werden nachstehend erläutert. Es zeigen:

Fig. 1    eine Prinzipskizze einer optischen Vorrichtung gemäß einem Ausführungsbeispiel,

Fig. 2    eine Prinzipskizze zur Veranschaulichung eines herkömmlichen Modells eines Gauß-Strahles bzw. -Strahlbündels,

Fig. 3    eine Skizze einer Umordnungseinheit mit linear angeordneten Monomodefasern gemäß einem Ausführungsbeispiel,

Fig. 4    eine vereinfachte Skizze zur Darstellung einer Bündelüberlagerung von Strahlbündeln und Strahlaufweitung mittels eines astronomischen Teleskops zur Strahlaufweitung gemäß einem vorteilhaften Ausführungsbeispiel,

Fig. 5    eine vereinfachte Skizze zur Darstellung der Strahlaufweitung mittels eines astronomischen Teleskops mit einer unvorteilhaften Bündelüberlagerung,

Fig. 6    eine vereinfachte Skizze zur Darstellung der Bündelüberlagerung und Strahlaufweitung mittels eines astronomischen Teleskops zur Erläuterung einer optimalen Bedingung zur Überlagerung von Strahlbündeln gemäß einem vorteilhaften Ausführungsbeispiel,

Fig. 7    eine vereinfachte Skizze zur Darstellung der Bündelüberlagerung und Strahlaufweitung mittels eines astronomischen Teleskops zur Erläuterung einer nicht optimalen Ausleuchtung des Objektivs bei unvorteilhaft stark kollimierten Strahlbündeln,

Fig. 8    eine vereinfachte Skizze zur Darstellung der Strahlaufweitung mittels eines astronomischen Teleskops gemäß Ausführungsbeispiel aus Fig. 1 mit Angaben zur Größe von Strahltaillen,

Fig. 9    eine vereinfachte Skizze zur Veranschaulichung des Strahlengangs einer optischen Vorrichtung unter Verwendung einer refraktiven Strahlaufweitungsoptik gemäß einem Ausführungsbeispiel,

Fig. 10    eine vereinfachte Skizze zur Veranschaulichung des Strahlengangs einer optischen Vorrichtung unter Verwendung einer reflektiven Strahlaufweitungsoptik gemäß einem weiteren Ausführungsbeispiel.

## Detaillierte Beschreibung der Ausführungsbeispiele gemäß den Figuren

Im-Folgenden werden Ausführungsbeispiele mit Bezug auf die Figuren näher beschrieben, wobei Elemente mit derselben oder ähnlichen Funktion mit denselben Bezugszeichen versehen sind.

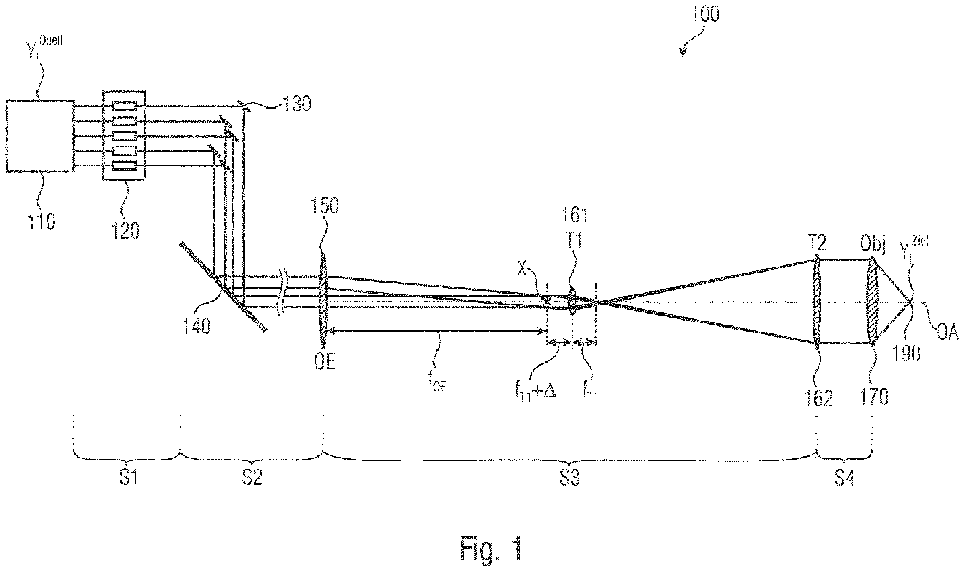

In Fig. 1 ist eine Prinzipskizze einer optischen Vorrichtung 100 gemäß einem Ausführungsbeispiel veranschaulicht. Dabei entspricht die optische Vorrichtung 100 einer mehrkanaligen optomechanischen Adressiereinheit zur Abbildung einer Vielzahl von zueinander parallel verlaufenden Strahlbündeln auf eine Bildfläche 190. Ausgehend von einer Quelle 110 werden mehrere Strahlbündel, die einen ersten Satz S1 von Strahlbündeln bilden, über die optische Vorrichtung 100 auf die Bildfläche 190 geleitet. Die einzelnen Strahlbündel des ersten Satzes S1 sind dabei parallel zueinander ausgerichtet. Mit anderen Worten gesagt, werden verschiedene Quellpunkte $Y_i^{Quell}$ in einer Eingangsebene bestimmten Zielpunkten $Y_i^{Ziel}$ in der Bildfläche 190 zugeordnet bzw. auf letztere abgebildet.

Als Quelle 110 für die Strahlbündel des ersten Satzes S1 von Strahlbündeln können eine oder mehrere Monomodequellen dienen. Licht aus einer Laserquelle wird beispielweise von einer Monomodefaser über Splitter auf mehrere Monomodefasern übertragen, deren Enden dann als Quellen der einzelnen Strahlbündel des Satzes S1 dienen, oder es werden mehrere Monomodelaser, ohne oder mit Faserkopplung, verwendet, um den Satz S1 von Strahlbündel bereitzustellen.

Die Strahlbündel des ersten Satzes S1 von Strahlbündeln werden an eine Umordnungseinheit 130, 140 weitergeleitet. Dies kann vermittels eines Kollimators 120, wie z.B. einer Gradientenindex-Linse, pro Bündel bzw. Kanal geschehen.

Die Strahlbündel des ersten Satzes S1 können monochromatisches Licht aufweisen. Die monochrome Eigenschaft kann durch das technische Einsatzgebiet der optischen Vorrichtung 100 bedingt sein, wie z.B. in einem Quantencomputer, kann aber auch bei anderen Anwendungsgebieten vorteilhaft sein, um chromatische Aberrationen zu vermeiden.

Alternativ zu obiger Beschreibung können die Strahlbündel des ersten Satzes S1 auch von Multimode-Quellen stammen, also einem Multimode-Laser oder einer Multimode-Faser. Pro Kanal bzw. Büdel des Satzes S2 kann ein geeigneter Kollimator vorgesehen sein, wobei die Dimensionen für die Kollimation der Strahlenbündel dann möglicher-Weise größer ausfällt als bei einer Monomode-Variante. Beispielsweise entstammt jedes Bündel des Satzes S1 einer Multimode-Faser, einem VCSEL oder einem Kanal eines VCSEL-Arrays. Die Bündel des Satzes S1 könnten in dem Fall der Multimode-Erzeugung durch ein Array von VCSELs gefolgt von einem Mikrolinsen-Array bzw. einer Mikro-Linse pro VCSEL erzeugt werden.

Die Umordnungseinheit ordnet den ersten Satz S1 von zueinander parallelen Strahlbündeln unter Beibehaltung der Parallelität zueinander um, so dass ein zweiter Satz S2 von zueinander parallelen Strahlenbündeln erhalten wird. Nachfolgend werden Ausführungsbeispiele beschrieben, bei denen die Umordnungseinheit mechanisch verstellbar bzw. auf unterschiedliche Umordnungen einstellbar ist.

Über die Umordnungseinheit 130, 140 wird der zweite Satz S2 von zueinander parallelen Strahlbündeln auf ein optisches Element 150 gerichtet, das ausgebildet ist, den zweiten Satz S2 von einem oder mehreren Strahlbündeln durch Bündelung auf eine Strahlaufweitungsoptik 161, 162 zu richten, so dass die Strahlaufweitungsoptik 161, 162 von einem dritten Satz S3 von Strahlbündeln erreicht wird. Das optische Element 150 ist ausgebildet, parallel zu dem zweiten Satz S2 von Strahlbündeln einfallendes Licht auf einen Ort eines Punktes X in oder um einen Abstand $f_{T,1} + \Delta$ kleiner als einem zweifachen einer Brennweite $f_{T,1}$ eines eingangsseitigen optischen Elements T1 der Strahlaufweitungsoptik 161, 162 vor oder nach, dem eingangsseitigen optischen Element T1 zu bündeln. Aufgrund der jedem Strahlbündel des zweiten Satzes inne wohnenden vorzugsweise Divergenz überlagern sich die Strahlbündel des dritten Satzes S3 an dem Punkt X in einem ausgedehnten Bereich. In anderen Worten ausgedrückt wird jedes Strahlbündel des Satzes S2 durch das optische Element 150 umgelenkt und als eines der Bündel des Satzes S3 auf den Punkt X gerichtet, um sich dort mit den anderen Bündeln des Satz 3 zu überlagern. Die Überlagerung findet in einem ausgedehnten Flächenbereich statt. Die Richtungen, mit denen die Bündel des dritten Satzes S3 auf den Punkt X gerichtet werden hängt eineindeuig von dem lateralen Ort ab, an welchem des entsprechende Strahlbündel des Satzes S2 auf das optische Element trifft.

Im Ausführungsbeispiel der Fig. 1 ist das optische Element 150 als einstufige refraktive Optik ausgebildet. Gemäß weiteren Ausführungsbeispielen kann das optische Element 150 auch als mehrstufige refraktive Optik oder als reflektive Optik ausgeführt sein.

im vorliegenden Ausführungsbeispiel der Fig. 1 befindet sich der Punkt X der Überlagerung des dritten Satzes S3 von Strahlbündeln vor dem eingangsseitigen optischen Element T1, beispielsweise einer Sammellinse eines Teleskops, das die Strahlaufweitungsoptik 161, 162 bildet. Die Strahlaufweitungsoptik 161, 162 ist ausgebildet, jedes Strahlbündel des dritten Satzes S3 von Strahlbündeln aufzuweiten, um einen vierten Satz S4 von aufgeweiteten Strahlbündeln zu erhalten. In der Fig. 1 ist die Strahlaufweitungsoptik 161, 162 aus einem Teleskop gebildet, dass eingangsseitig eine Linse T1 und ausgangsseitig eine Linse T2 aufweist. Der vierte Satz S4 von Strahlbündeln wird über eine der Strahlaufweitungsoptik 161, 162 nachgeordneten Abbildungsoptik 170 auf die Bildfläche 190 abgebildet. Dabei ist die Abbildungsoptik 170 im Ausführungsbeispiel gemäß der Fig. 1 eingerichtet, den vierten Satz S4 von aufgeweiteten Strahlbündeln auf die Bildfläche 190 zu fokussieren.

Mittels der Strahlaufweitungsoptik 161, 162, die hier als astronomisches Teleskop mit zwei optischen Elementen bzw. Linsen T1, T2 dargestellt ist, gelingt es die im Punkt X vor dem Teleskop im Wesentlichen zur Überlagerung gebrachten Strahlbündel des dritten Satzes S3 von Strahlbündeln auf einer Ebene, hier einer eingangsseitigen Oberfläche der Abbildungsoptik 170 zu einem vierten Satz S4 von Strahlbündeln mit gegenüber dem dritten Strahlbündelsatz erweitertem Bündeldurchmesser und geringere Bündelausbreitungsrichtungsvarianz unter den Bündeln zu überlagern, wobei der vierte Satz S4 von Strahlbündeln durch die Abbildungsoptik 170 auf die Bildebene 190 fokussiert wird.

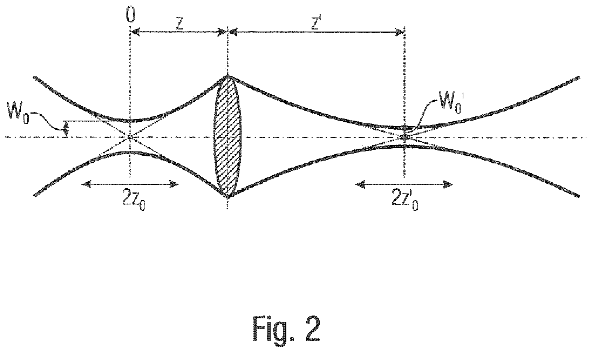

**[0052]** - Monomodige Gaußbündel, die zur Fokussierung auf beispielsweise Ionen geeignet sind, unterliegen den Gesetzen der Gauß-Strahloptik. Ausführungsbeispiele der vorliegenden Erfindung, wie das von Fig. 1, erreichen die Erzeugung von Taillengrößen der auf die Bildebene 190 fokussierten Bündel, die sehr klein sein können und im Wesentlichen nur von der Größe bzw. Durchmesser der Abbildungsoptik 170 und der Wellenlänge abhängen, aber von der Anzahl an Strahlbündeln in den Sätzen S1 bis S4 im Wesentlichen unabhängig sind. Um das zu veranschaulichen, sei zunächst auf Fig. 2 Bezug genommen.

Fig. 2 veranschaulicht ein herkömmliches Modell eines Gauß-Strahles bzw. -Strahlbündels der/das zur Näherung für eine Berechnung und Darstellung des Verhaltens von Strahlbündeln gemäß der hier aufgeführten Ausführungsbeispiele Verwendung findet.

Demzufolge sind die Strahlbündel der Wellenlänge durch entsprechende Taillen wo und Winkel $\theta_0$ gemäß

$$\theta_0 = \frac{\lambda}{\pi w_0}$$

$$(1)$$

und durch Strahlradien entsprechend des Abstands z von der Taille W

$$W(z) = w_0 \sqrt{1 + \left(\frac{z}{z_0}\right)^2}$$

$$(2)$$

charakterisiert, wobei zo die Rayleighlänge

$$z_0 = \frac{\pi\, w_0^2}{\lambda} \tag{3}$$

ist, über die sich der Strahlradius auf das $\sqrt{12}$-fache des Taillenwerts W vergrößert.

Durch optische Elemente werden Gaußtaillen ineinander transformiert, wobei sich die Bündelquerschnitte von einer Taille W weg vergrößern und zu einer Taille W hin verjüngen. Ein ausgeleuchteter Bereich eines im Strahlen- bzw. Bündelgang befindlichen optischen Elements hängt mit einem Öffnungswinkel $\theta_0$ des Strahlbündels und einem Abstand z zur Taillenebene zusammen. Für eine geringe Taillengröße wird der Bündelöffnungswinkel größer, d.h., dass bei einem gegebenen Abstand von optischem Element und Taille entsprechend der ausgeleuchtete Bereich des optischen Elements größer wird. Um einen ausreichenden Energieeinschluss innerhalb des Gauß'schen Strahlbündels von >99% zu gewährleisten, müssen Elemente im Strahlengang, die potentiell bündelbegrenzend wirken, zudem wenigstens einen Durchmesser vom drei-fachen des an dieser Stelle vorliegenden Bündelradius haben.

In bekannten technischen Ansätzen führen achsferne bzw. deutlich zu einer optischen Achse OA - als gepunktete Linie angedeutet - geneigte Bündel dazu, dass Anforderungen an Größe und Qualität der optischen Elemente zunehmen bzw. dass bei beschränkten Größen der optischen Elemente Transmissionsverluste durch partielles Abschneiden einer Gaußverteilung - der Strahlintensität - entstehen. Entsprechende Effekte treten bspw. durch quellseitige Anordnungen oder durch Strahlablenkungen auf, die zur Zuordnung von Quellpunkten $Y_i^{Quell}$ zu Zielpunkten $Y_i^{Ziel}$ notwendig sind.

Gemäß einem Ausführungsbeispielen der vorliegenden Erfindung ist der Durchmesser der beispielsweise als Objektiv ausgestalteten Abbildungsoptik 170 nicht wesentlich größer und die Brennweite nicht wesentlich kleiner, als es zur Erzeugung eine Taille der Größe $W_{ziel}$ - die die ortsaufgelöste Adressierung der Zielpunkte $Y_i^{Ziel}$ in der Bildfläche 190 ermöglicht - nötig ist, und dafür, dass für Gauß'sche Bündel eine Transmission >99% erzielt wird. Das Objektiv 170 weist eine Brennweite $f_{obj}$ und einen Durchmesser $D_{obj}$ auf und transformiert das Strahlbündel in seiner Fokalebene, die der Bildfläche 190 entspricht, in eine den Anforderungen der Abbildungsaufgabe angepasste Gaußtaille $W_{ziel}$.

Die Öffnung der Abbildungsoptik 170, beispielsweise einem Objektiv, wird dabei als numerische Apertur (NA), eine Größe, die über

$$NA = \sin(\theta) = \sin\left(atan\left(\frac{D_{obj}/2}{f_{obj}}\right)\right) \tag{4}$$

definiert ist, bezeichnet.

Nach (1) und (4) bestimmt sich unter Berücksichtigung der >99% Transmissionsforderung der Öffnungswinkel, den ein Objektiv mindestens haben muss zu

$$\theta_{oeff} = atan\left(\frac{D_{obj}/2}{f_{obj}}\right) = 1{,}5 \cdot \frac{\lambda}{\pi\, w_{ziel}} \tag{5}$$

wobei technische Gegebenheiten des Aufbaus wie der Abstand vom Objektiv zur Zielebene bzw. deren Ausdehnung Brennweite bzw. Objektivdurchmesser festlegen.

-Opto-mechanische Strahlumlenkung mittels der optischen Umordnungseinheit und Strahlaufweitung mittels der Strahlaufweitungsoptik können in den Ausführungsbeispielen des opto-mechanischen Systems daher so gestaltet sein, dass für jeden Kanal das auf das Objektiv treffende aufgeweitete Bündel innerhalb des nach den technischen Gegebenheiten bestimmten Objektivdurchmessers bleibt und diesen nahezu vollständig ausleuchtet.

Auf die oben beschriebene Art und Weise ermöglichen Ausführungsbeispiele der vorliegenden Erfindung eine gleichzeitige hochpräzise Zuordnung einer Vielzahl von eingangsseitigen Lichtquellpunkten $Y_i^{Quell}$ zu ausgangsseitigen Zielpunkten $Y_i^{Ziel}$ in einer Zielebene bzw. Bildfläche, wobei die Zielpunkte $Y_i^{Ziel}$ nicht notwendig ortsfest sind.

So können beispielsweise in Ionenfallen damit beladungsabhängige Ionenabstände oder durch Streufelder beeinflusste Ionenpositionen nachgeführt werden. Die hinsichtlich einer optischen Achse OA vom Objektiv zentrierte und auf dessen Durchmesser abgestellte optische Gesamtanordnung, die durch eine geeignete Mikro-Opto-Mechanik ermöglicht wird, erlaubt es Objektive zu verwenden, deren Spezifikationen hinsichtlich einer numerischen Apertur im Wesentlichen nur von den Auflösungsanforderungen innerhalb der Zielebene und hinsichtlich ihrer Brennweite im Wesentlichen nur vom konstruktiv bedingten Arbeitsabstand abhängen. In dem Fall, dass beispielsweise die Bildfläche 190 in einer Ionenfalle liegt, kann der vorerwähnte Arbeitsabstand bspw. durch eine Dicke eines Vakuumfensters und einen Abstand der Falle zum Fenster gegeben sein. Skalierungen zu größeren Ionenzahlen sind damit nicht wie bei anderen opto-mechanischen Ansätzen durch deutlich aufwändigere Objektive mit größeren numerischen Aperturen oder größeren Durchmessern limitiert. Ähnliches gilt auch bei anderen technischen Anwendungsbeispielen der Vorrichtung 100. Die bei den Ausführungsbeispielen der vorliegenden Erfindung verwendbare limitierte numerische Objektivapertur begrenzt wegen einer größeren Schärfentiefe zudem den notwendigen Aufwand zur longitudinalen Justierung des Objektivs bezüglich der Bildfläche 190, wie z.B. einer Ionen--Ebene. Gefaltete und, bis auf das Objektiv, rein reflektive Optiken erlauben kompakte Aufbauten, die zudem wellenlängenunabhängig und damit für verschiedene Anwendungsfälle, bspw. für Ionen- Fallen mit $^{40}$Ca$^+$, $^{138}$Ba$^+$ oder anderen Ionen, einsetzbar sind.

In einer konkreten Ausführung-kann die Vorrichtung von Fig. 1 zur Realisierung einer optomechanischen Adressiereinheit, der Einfachheit halber für eine lineare Anordnung in der Bildfläche 190, wie folgt dimensioniert werden, beispielsweise für eine lineare Anordnung von $^{40}$Ca$^+$ Ionen in einer Ionen-Falle, wie z.B. einer Paul-Falle. Als Quelle 110 eines ersten objektseitigen Satzes S1 von zueinander parallel verlaufenden Strahlbündeln kann eine adäquate lineare Anordnung von eingangsseitigen Monomodefasern dienen. Für die Abstände der Quellen 110 sind Faserdurchmesser, Durchmesser der Kollimationslinsen 120 und notwendige Kanalabstände seitens der Mechanik zu berücksichtigen. Wird von einem durch die Mechanik bestimmten Rastermaß von 500μm ausgegangen, sind Kollimationslinsen 120 mit Durchmessern unterhalb 500μm zu wählen. Können die Quellen in unterschiedlichen, bspw. gegenüberliegenden Ebenen angeordnet werden, sind Kollimationslinsen 120 mit Durchmessern unterhalb 1mm möglich. Für die Abstände von $^{40}$Ca$^+$ Ionen in der Ionen-Falle kann beispielsweise ein mittlerer Wert von ca. 5μm veranschlagt werden, woraus sich ein Abbildungsmaßstab für deren Abstände von 100:1 ergibt. Die Wellenlänge für die optische Vorrichtung 100 bzw. Adressieroptik für $^{40}$Ca$^+$ Ionen beträgt 729nm. Ein Modenfeldradius einer zuführenden Monomodefaser 110 von etwa 2,5μm kann in guter Näherung als Eingangs-Gaußtaille angesehen werden. Eine im Strahlengang anzuordnende Umordnungseinheit 130, 140, deren Größe durch einen Kanalabstand nach oben begrenzt ist, begrenzt den Bündeldurchmesser der Strahlen. Ein Bündelradius an dieser Stelle sollte demnach unter 150μm gehalten werden. Wenn einzelne Ionenabstände im Zentrum der Ionen-Falle unter 5μm liegen, ist es vorteilhaft, die Größe eines Umlenkelements, beispielsweise eines verstellbaren Spiegels 130, von unter 500μm zu wählen, d.h. vorzugsweise ist der Bündeldurchmesser W am Umlenkelement 130, 140 kleiner 100μm zu wählen. Fig. 1 zeigt eine vorzugsweise Realisierung mit einem nach der Kollimationslinse 120 schwach konvergenten Bündel.

Zur Realisierung des Abbildungsmaßstabs sind Strahlaufweitungsoptik, Brennweite $f_{OE}$ des optischen Elements 150 und Objektivbrennweite $f_{obj}$ geeignet zu dimensionieren. Für den Zusammenhang zwischen Abstand der Quellpunkte $Y$ die-Quell und Abstand der Zielpunkte $Y_i^{Ziel}$, o. B. d. A. jeweils als lineare Anordnung in y-Richtung, kann, wenn das abbildende optische Element 150 eine Brennweite $f_{OE}$ hat und die Strahlaufweitungsoptik 161, 162 als Teleskop mit zwei Linsen T1, T2 der Brennweiten $f_{T,1}$ und $f_{T,2}$ angenommen wird, der folgende formelmäßige Zusammenhang gefunden werden:

$$Y_i^{Ziel} = Y_i^{Quell} \cdot \frac{f_{obj}}{f_{OE}} \cdot \frac{f_{T,1}}{f_{T,2}}$$

$$(6)$$

Ist das abbildende optische Element 150 als Parabolspiegel mit Krümmungsradius $R_{c\_mirr}$ ausgeführt, ergibt sich aus (6) der adäquate Zusammenhang

$$Y_i^{Ziel} = Y_i^{Quell} \cdot \frac{f_{obj}}{R_{c\_mirr}/2} \cdot \frac{f_{T,1}}{f_{T,2}}$$

$$(7)$$

Für (6) bzw. (7) ist vorausgesetzt, dass Abstände parallel ausgerichteter Fasern als Quellebene unter Beibehaltung der Parallelität durch eine geeignete Umordnungseinheit 130, 140 bzw. Opto-Mechanik im Verhältnis 1:1 in Abstände zur optischen Achse OA des abbildenden optischen Elements 150 übersetzt werden.

Ermöglicht die Umordnungseinheit 130, 140 - unter Beibehaltung der o.g. Parallelitätsforderungen - nun eine Transformation von Quellpositionen $Y_i^{Quell}$ zu mit $Y_i^{OE}$ bezeichneten Positionen auf dem abbildenden optischen Element- die wiederum Abstände zur optischen Achse OA beschreiben - können mittels

$$Y_i^{Ziel} = Y_i^{c\_OE} \cdot \frac{f_{obj}}{f_{OE}} \cdot \frac{f_{T,1}}{f_{T,2}}$$

$$(8)$$

bzw. im Falle des Parabolspiegels als abbildendes optisches Element mittels

$$Y_i^{Ziel} = Y_i^{c\_mirr} \cdot \frac{f_{obj}}{R_{c\_mirr}/2} \cdot \frac{f_{T,1}}{f_{T,2}}$$

$$(9)$$

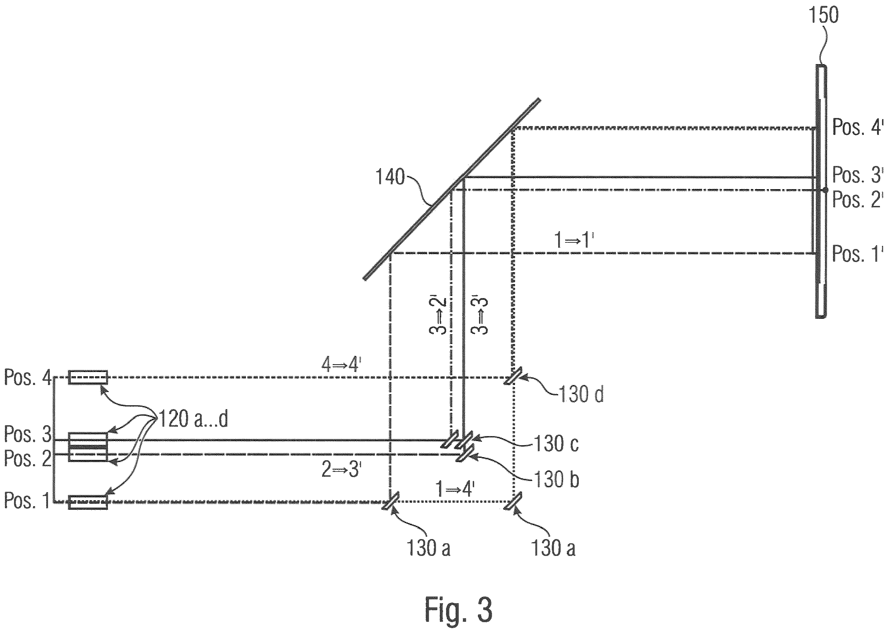

freie Zuordnungen von Quell- und Zielpunkten adressiert werden. Mögliche Realisierungen der Zuordnung von Quellpositionen $Y_i^{Quell}$ zu Positionen $Y_i^{c\_mirr}$ sind in Fig. 3 beispielhaft skizziert. Zum Zwecke der Darstellung der Variabilität der Zuordnungen sind diverse Möglichkeiten illustrativ dargestellt, der Anwendungsfall sieht eine eineindeutige Zuordnung von N Quell-Kanälen bzw. Quellpunkten $Y_i^{Quell}$ auf N Ziel-Kanäle bzw. Zielpunkte $Y_i^{Ziel}$ vor.

Wird beispielhaft von einem Objektiv mit einer NA von 0,3 ausgegangen, dann können für die Wellenlänge von 729nm in der Ionenebene Taillengrößen <1.5$\mu$m erzeugt werden. Diese erlauben eine präzise Adressierung von Ionenpositionen, die im Abstand von circa 5$\mu$m liegen. Wird weiterhin von einer Brennweite von 30mm ausgegangen, die den Betrieb der Ionenfalle hinter einem mehr als 10mm dicken Vakuumfenster gestattet und wird eine typische Strahlaufweitungsoptik 161, 162 für ein Abbildungsmaßstab von 10:1 verwendet, dann wird der Abbildungsmaßstab von 100:1, der dem Verhältnis der Abstände der Quellpunkte $Y_i^{Quell}$ zum Abstand der Zielpunkte $Y_i^{Ziel}$ entspricht, mit einem optischen Element 150 mit einer Brennweite von 300mm - bspw. mit einem Spiegel mit einem Krümmungsradius von 600mm - realisiert.

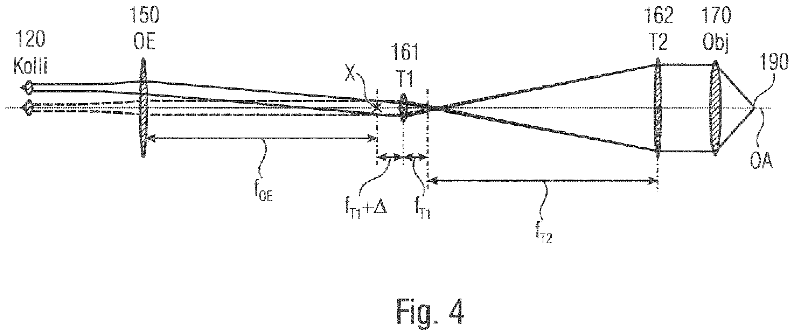

Bei den Ausführungsbeispielen der vorliegenden Anmeldung, wie zum Beispiel in Fig. 1, wird beispielsweise die Strahlaufweitungsoptik 161, 162 in einem geeigneten Abstand von $f_{OE}$ + $f_{T1}$+$\Delta$ zum Parabolspiegel angeordnet. Damit liegen der Ort bzw. Punkt X der Überlagerung der Bündel im Abstand $f_{T,1}$ + $\Delta$ vor der ersten Linse T1 des Teleskops, was wiederum zur teleskopausgangsseitigen Zentrierung der Bündel führt, wie es beispielsweise in Fig. 1 und Fig. 4 gezeigt ist**Fehler! Verweisquelle konnte nicht gefunden werden..** Eine Möglichkeit zur Bestimmung von $\Delta$ wird im Folgenden hergleitet.

Die Ausleuchtung entsprechend gegebener bzw. geforderte Objektiv- bzw. Ausgangsdurchmesser der Strahlaufweitungsoptik wird im Wesentlichen mit der faserseitigen Kollimationsoptik 120 eingestellt. Wird eine konventionelle Mikrolinse verwendet, ergibt sich die Einstellung dadurch, dass der Objektabstand um einige % abweichend von einer nominellen Brennweite f gewählt wird, damit die gewünschte leichte Konvergenz bzw. Divergenz erzielt wird. Beispielsweise liegt der Abstand zwischen Quelle, wie z.B. Laser oder Faserausgang, und Kollimator, zwischen dem 0,9 und dem 1,1 fachen der nominellen Brennweite.

Ein intendiertes Anwendungsgebiet von Ausführungsbeispielen der vorliegenden Erfindung sind, wie oben bereits erwähnt, Quantentechnologien, bei denen die simultane Adressierung einer Mehrzahl von Ionen in einer Ionenfalle eine notwendige Teilaufgabe darstellt. Vergleichbare Aufgabenstellungen gibt es innerhalb diverser anderer Einsatzfelder - die können bspw. innerhalb der Kommunikationstechnologien, in der Sensorik oder auch im Bereich von Strahlführungen in industriellen Anwendungen liegen. Fig. 3 veranschaulicht eine Skizze einer Umordnungseinheit 130, 140 mit Strahlbündeln, die aus hier exemplarisch linear angeordneten Monomodefasern stammen. Im Ausführungsbeispiel der Fig. 3 weisen die jeweiligen Monomodefasern einzelne Kollimatoren 120 a .. d auf, die ein im optischen Sinne schwach konvergentes bzw. schwach divergentes Strahlbündel erzeugen. Die einzelnen Positionen Pos.1 .. 4 der Strahlbündel, die Quellpunkten $Y_i^{Quell}$ entsprechen, werden mittels jeweils eines geeignet bewegbaren bzw. verstellbaren Spiegels 130 a .. d pro Strahlbündel und einem für sämtliche Strahlbündel vorgesehenen starren Spiegel 140 Positionen Pos. 1' .. 4' auf dem optischen Element 150 zugeordnet. Dabei können einzelne Strahlbündel nicht nur gegeneinander verschoben sondern auch umgeordnet werden. In der Fig. 3 werden die einzelnen Verschiebungen der Positionen Pos.1 .. 4 nach Pos. 1' .. 4' mittels Pfeilen angedeutet. Die verstellbaren Spiegel 130 a .. b sind vorzugsweise derart gelagert, dass sie eine lineare Bewegung zulassen. Je nach Ausführungsform lässt sich die gesamte optische Umordnungseinheit 130, 140 oder Teile davon mittels mechanischer und/oder piezoelektrischer und/oder magnetisch ansteuerbarer Stellelemente steuern. Entlang des Strahlengangs der optischen Vorrichtung 100 weist die optische Umordnungseinheit 130, 140 einen im Strahlengang hinter den verstellbaren Spiegeln 130 angeordneten starren Spiegel 140 auf, über den die Strahlbündel auf das optische Element 150 gerichtet werden.

Wie es das Bespiel von Fig. 3 veranschaulicht, kann die optische Umordnungseinheit 130, 140 ausgebildet sein, die Umordnung von Positionen, hier der Pos.1 .. 4 nach Pos. 1' .. 4', weglängenerhaltend zu erzielen, so dass jedes Strahlbündel des ersten Satzes S1 von Strahlbündeln bei einem Durchlaufen der optischen Umordnungseinheit 130, 140, um ein Strahlbündel des zweiten Satzes S2 von Strahlbündeln zu werden oder dazu beizutragen, eine Wegstrecke zurücklegt, die unabhängig von einer Einstellung der Umordnung ist. Darüber hinaus ist die optische Umordnungseinheit 130, 140 ausgebildet, um den ersten Satz S1 von zu der Strahlrichtung parallelen Strahlbündeln unter Beibehaltung der Parallelität zueinander und zu der Strahlrichtung so umzuordnen, dass der zweite Satz S2 von Strahlbündeln zu der Strahlrichtung parallel ist bzw. bleibt.

Im Folgenden wird anhand mehrerer aufeinanderfolgender Skizzen eine bevorzugte Einstellung zur einzelnen optischen Bauteile der optischen Vorrichtung 100 veranschaulicht, die eine optimale Ausleuchtung der Zielpunkte $Y_i^{Ziel}$ erlaubt.

In Fig. 4 wird eine vereinfachte Skizze zur Darstellung einer Bündelüberlagerung von Strahlbündel und ihrer Strahlaufweitung mittels eines astronomischen Teleskops gemäß einem vorteilhaften Ausführungsbeispiel dargestellt. Dabei wird vereinfachend der Strahlgang ausgehend von den Kollimatoren 120 der einzelnen Strahlbündel veranschaulicht - die Umordnungseinheit 130, 140 ist nicht gezeigt. Die auf das optische Element 150 zulaufenden Strahlbündel weisen eine nur geringe Konvergenz bzw. Divergenz auf und verlaufen parallel zu einer optischen Achse OA, die in den Figuren als gepunktete Linie angedeutet ist. Durch das optische Element 150 werden die einzelnen Strahlbündel abgelenkt. In der Brennweite $f_{OE}$ des optischen Elements 150 laufen die Strahlenbündel dann zusammen, wobei eine gemeinsame Mitte aller Strahlbündel durch einen Punkt X im Fokus von dem optischen Element 150 definiert wird. Dabei ist der Ort des Punktes X in einem vorherbestimmten Abstand $f_{T,1} + \Delta$ vor dem eingangsseitigen optischen Element bzw. der eingangsseitigen Linse T1 der Strahlaufweitungsoptik 161, 162 angeordnet. Im vorliegenden Ausführungsbeispiel ist der Abstand des Punktes X von der eingangsseitigen Linse T1 derart eingestellt, dass die Aufweitung der Strahlbündel mittels der Strahlaufweitungsoptik 161, 162 die ausgangsseitige Linse T2 sowie die ihr nachgeschaltete Abbildungsoptik 170 - wie z.B. ein Objektiv- im Wesentlichen vollständig ausleuchtet, wie z.B. zu mehr als 50%, und zwar beispielsweise von jedem aufgeweiteten Strahlbündel zu mehr als 50%. Durch das optische Element 150 werden die ursprünglichen Positionen/Orientierungen der Strahlbündel, d. h. also verschiedene Orte und gleicher Winkel achsparalleler Strahlbündel in denselben Ort und verschiedene Winkel übertragen. Die Quellen 110, beispielsweise Monomodequellen, können dabei ein- oder auch zweidimensional angeordnet sein.

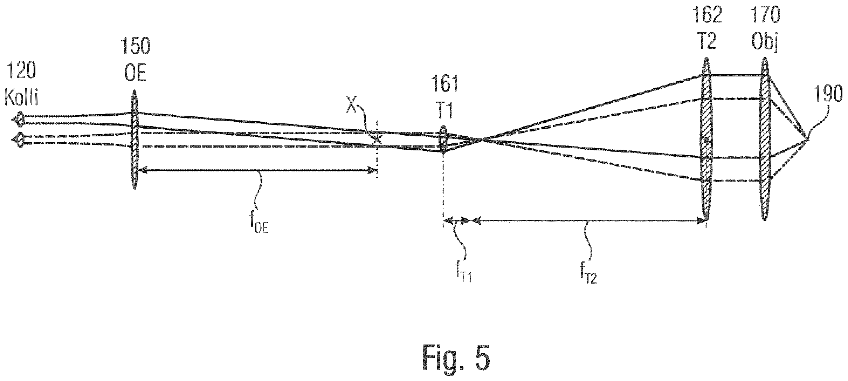

In Fig. 5 wird eine vereinfachte Skizze zur Darstellung einer Bündelüberlagerung von Strahlbündel und ihrer Strahlaufweitung mittels eines astronomischen Teleskops gemäß einem weiteren Ausführungsbeispiel dargestellt. Abweichend von der Fig. 4 ist in der Fig. 5 der Ort des Punktes X in einem Abstand von dem eingangsseitigen optischen Element bzw. der eingangsseitigen Linse T1 des Teleskops derart bestimmt, dass sich die Strahlbündel nicht zwangsläufig in dem-ausgangsseitigen optischen Element bzw. der ausgangsseitigen Linse T2 oder dem nachgeschalteten Objektiv 170 überlagern. Demnach verraten schau Licht die Fig. 5 den Strahlgang eines Bündels bei nicht angepasstem Abstand zwischen dem optischen Element 150 und dem eingangsseitigen optischen Element 161 der Strahlaufweitungsoptik 161, 162.

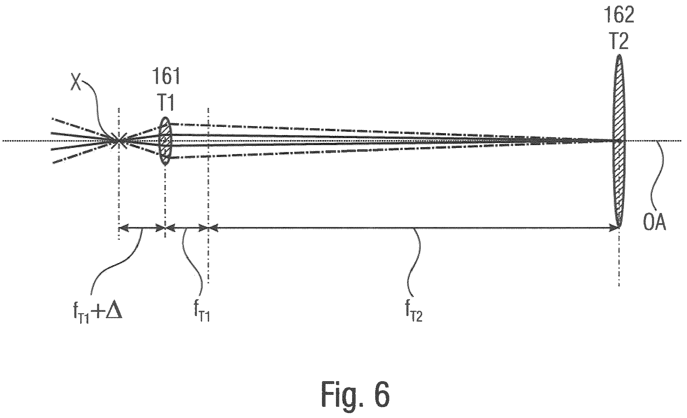

Eine vorteilhafte Einstellung bzw. Dimensionierung der optischen Vorrichtung dafür, dass alle Strahlbündel, die parallel von Quellen in verschiedener Entfernung von der optischen Achse OA ausgehen, sich in dem ausgangsseitigen optischen Element 162 bzw. der ausgangsseitigen Linse T2 sowie dem der Strahlaufweitungsoptik 161, 162 nachgeschalteten Objektiv 170 perfekt überlagern, wird anhand der Fig. 6 erläutert. Bei Betrachtung der Fig. 4 sowie Fig. 5 ist ein Unterschied der Strahlengänge durch die optische Vorrichtung 100 deutlich zu erkennen.

Anhand der Fig. 6 soll die soeben erwähnte Dimensionierung für eine optimale Überlagerung von Strahlbündeln gemäß einem Ausführungsbeispiel verdeutlicht werden. Dazu wird vereinfachend nur der Ausschnitt aus den Fig. 4 und 5 gezeigt, der den Punkt X am Ort der Überlagerung der einzelnen Strahlbündel sowie die Strahlaufweitungsoptik 161, 162 umfasst. Die zu fordernde Bedingung besteht darin, dass die Bündelmitten der Strahlbündel, die im Abstand $f_{OE}$

nach dem abbildenden optischen Element 150 zusammenfallen, auch in einer Ebene des ausgangsseitigen optischen Elements bzw. der ausgangsseitigen Linse T2 des Teleskops wieder zusammenfallen. In der Fig. 6 repräsentieren die einzelnen Strahlen jeweils die Mitten der einzelnen Strahlbündel die von verschiedenen Positionen des abbildenden optischen Elements 150 in Richtung der Strahlaufweitungsoptik 161, 162 ausgehen. Die Bedingung kann als Abbildungsaufgabe formuliert werden, für die folgendes gilt:

Der Punkt X bzw. Objektpunkt ist ein auf der optischen Achse OA liegender Ort, an dem alle Mitten der Strahlbündel, also die Bündelzentren, zusammenfallen. Der Punkt X wird durch die Linse T1 in der Bildweite $f_{T,1} + f_{T,2}$ in einen ebenfalls auf der optischen Achse liegenden Bildpunkt abgebildet. Eine Bestimmungsgröße zur Erfüllung der Abbildungsaufgabe ist der Abstand vom Objektpunkt bzw. X zu T1

Dazu sind in die Abbildungsgleichung

$$\frac{1}{s} + \frac{1}{s'} = \frac{1}{f} \qquad\qquad (ED\ 1)$$

einzusetzen:

als Objektweite s die Größe $f_{T1} + \Delta$

als Bildweite s' die Größe $f_{T1} + f_{T2}$

und als Brennweite f die Größe $f_{T1}$

womit sich die zu bestimmende Größe $\Delta$ zu

$$\Delta = \frac{f_{T1}}{f_{T2}}(f_{T1} + f_{T2}) - f_{T1} = f_{T1}^2 / f_{T2} \qquad\qquad (ED\ 2)$$

ergibt. Es soll gemäß alternativer Ausführungsbeispiele genügen, wenn $\Delta$ in einem Bereich $\pm$ 50% von dem Wert gemäß ED 2 liegt.

Für die Bündelüberlagerung im Objektiv 170 ergeben sich geringfügige Änderungen von $\Delta$, wenn ein endlicher Abstand zwischen T2 und dem Objektiv 170 zu berücksichtigen ist, bspw. wenn dort weitere optische Elemente im Strahlengang einzubringen sind.

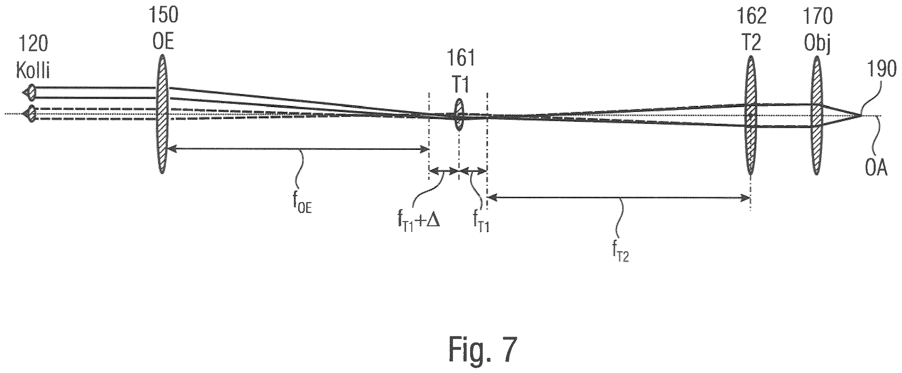

Fig. 7 zeigt eine vereinfachte Skizze zur Darstellung der Bündelüberlagerung und Strahlaufweitung mittels eines astronomischen Teleskops mit den Linsen T1, T2 in Analogie zu den vorhergehenden Fig. 4 bis 6 zur Erläuterung einer ungenügenden Ausleuchtung des Objektivs 170 bei zu stark kollimierten Strahlbündeln. Eine Ausleuchtung des ausgangsseitigen optischen Elements bzw. der ausgangsseitigen Linse T2 der Strahlaufweitungsoptik 161, 162 bzw. dem der Strahlaufweitungsoptik 161, 162 nachgeschalteten Objektiv 170 wird dadurch eingestellt, dass die parallelen Strahlbündel, die auf das abbildenden optischen Element 150 treffen, eine gewisse Konvergenz oder Divergenz haben, mit anderen Worten gesagt, nicht ideal kollimiert sind. Dies kann der Fig. 4 links vom abbildenden optischen Element 150 entnommen werden, wobei die gekrümmten Linien der einzelnen Strahlbündel Gauß'sche-Strahlbündel andeuten.

Aus Fig. 7 ist erkennbar, dass bei zu stark kollimierten Strahlbündeln die Strahlbündel nur einen sehr kleinen Teil des ausgangsseitigen optischen Elements T2 bzw. dem der Strahlaufweitungsoptik 161, 162 nachgeschalteten Objektiv 170 ausleuchten.

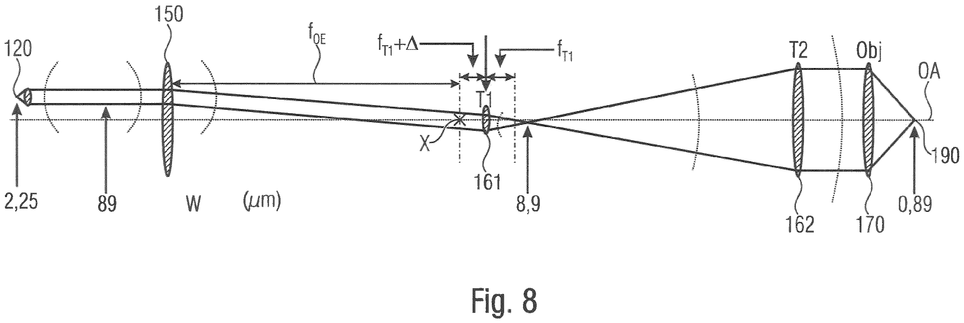

Fig. 8 zeigt eine vereinfachte Skizze zur Darstellung der Strahlaufweitung mittels eines astronomischen Teleskops gemäß einem Ausführungsbeispiel im Zusammenhang mit Erläuterung des Gauß'schen Strahls in der Fig. 2. In der Fig. 8 wird ein Ausführungsbeispiel beschrieben, bei der die Abstände der Quellpunkte $Y_i^{Quell}$ und Zielpunkte $Y_i^{Ziel}$ sich um den Faktor 100 unterscheiden. Entsprechend gibt es natürlich auch eine Verkleinerung eines Strahlbündels bzw. einer Bündel Taille, wie dies den Taillengrößen in Fig. 8 zu entnehmen ist. Ausgangspunkt für die 100:1-Verkleinerung ist dabei nicht die Taille des Strahlbündels der Quelle 110 sondern die Taille, die durch eine nicht auf ideale Kollimation eingestellte Kollimationslinse 120 erzeugt wird. Im Ausführungsbeispiel beträgt diese 89 Mikrometer und wird durch die 100:1-Verkleinerung in der Fokalebene des Objektivs zu einer Taillengröße von 0,89 Mikrometer transformiert.

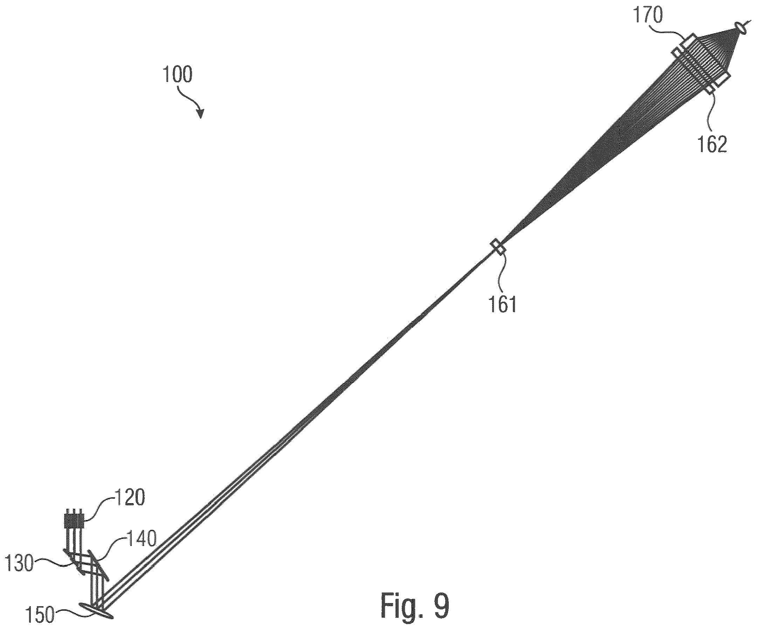

Fig. 9 zeigt eine vereinfachte Skizze zur Veranschaulichung des Strahlengangs einer optischen Vorrichtung 100 unter Verwendung einer refraktiven Strahlaufweitungsoptik 161, 162 gemäß einem Ausführungsbeispiel. Im Unterschied zum Ausführungsbeispiel der Fig. 1 weist das Ausführungsbeispiel gemäß Fig. 9 ein reflektives optisches Element 150 auf. Das reflektive abbildenden optischen Element 150 kann beispielsweise ein Parabolspiegel sein. Bei dem Ausführungsbeispiel mit einem reflektiven abbildenden optischen Element 150 - Parabolspiegel - ist die Quelle 110 bzw. der Kollimator 120 in einem bestimmten Winkel angeordnet, damit keine Abschattung auftreten kann.

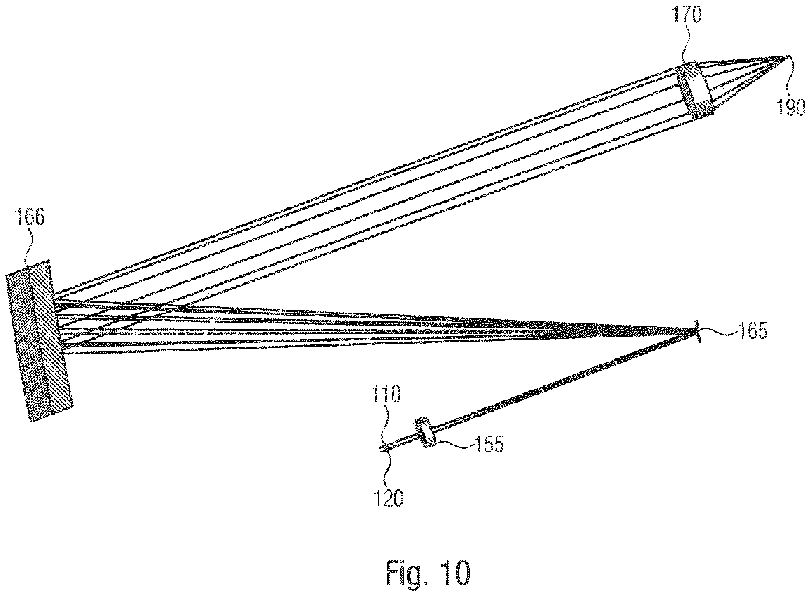

In Fig. 10 wird eine vereinfachte Skizze zur Veranschaulichung des Strahlengangs einer optischen Vorrichtung 100 unter Verwendung einer reflektiven Strahlaufweitungsoptik 165, 166 gezeigt. Im Unterschied zu den vorhergehend erläuterten Ausführungsbeispielen der Fig. 1 und 3 bis 9 weist das Ausführungsbeispiel der Fig. 10 keine Umordnungseinheit 130, 140 auf. Die einzelnen parallelen Strahlbündel der Strahlquelle 110 werden lediglich über der Strahlquelle 110 Kollimator 120 direkt auf ein abbildendendes optisches Element 155 geleitet, von wo aus die Strahlbündel über eine Strahlaufweitungsoptik 165, 166, in Form eines reflektiven Teleskops das zwei Parabolspiegel umfasst, zum Objektiv 170 weitergeleitet werden, über welches die Strahlen in eine Bildfläche 190 fokussiert werden.

Bezugszeichenliste:

| | |
|---|---|
| 100 | optische Vorrichtung |
| 110 | Quelle |
| 120 a .. b | Kollimator |
| 130 a .. b | verstellbare Spiegel |
| 140 | ortsfester starrer Spiegel |
| 150 | Abbildendes optisches Element |
| 155 | abbildendes optisches Element (Parabolspiegel) |
| 170 | Abbildungs-Optik, Objektiv |
| 190 | Bildfläche bzw. Bildebene |
| 161, 162 | Strahlaufweitungsoptik (refraktives Teleskop) |
| 165, 166 | Strahlaufweitungsoptik (reflektives Teleskop) |

| | |
|---|---|
| POS 1..4 | Position der Strahlbündel vor einer Umordnung |
| POS 1'..4' | Position der Strahlbündel nach einer Umordnung |
| T1 | eingangsseitiges optisches Element (161) bzw. eingangsseitige Linse Teleskop |
| T2 | ausgangsseitiges optisches Element (162) bzw. ausgangsseitige Linse Teleskop |

| | |
|---|---|
| $f_{OE}$ | Brennweite des optischen Elements (150) |
| $f_{T,1}$ | Brennweite des eingangsseitigen optischen Elements T1 |
| $f_{T,2}$ | Brennweite des ausgangsseitigen optischen Elements T2 |

| | |
|---|---|
| D | Durchmesser |
| $\Delta$ | Abweichung |
| $\theta$ | Winkel |
| $\lambda$ | Wellenlänge |
| $Y_i^{Quell}$ | Quellpunkte bzw. Quellposition |
| $Y_i^{Ziel}$ | Zielpunkte bzw. Zielposition auf der Bildfläche (190) |
| $R_{c\_mirr}$ | Radius Parabolspiegel (Brennweite) |
| $Y_i^{c\_mirr}$ | Positionen auf dem abbildenden optischen Element |
| $Y_i^{OE}$ | Positionen auf dem abbildenden optischen Element |

**Patentansprüche**

1.  Optische Vorrichtung (100) zum Abbilden eines ersten, objektseitigen Satzes (S1) von zueinander parallel verlaufenden Strahlbündeln auf eine Bildfläche, mit

    einer Strahlaufweitungsoptik (161, 162) ;
    einer optische Umordnungseinheit (130, 140), die ausgebildet ist, den ersten Satz (S1) von zueinander parallelen Strahlbündeln unter Beibehaltung der Parallelität zueinander umzuordnen, um einen zweiten Satz (S2) von zueinander parallelen Strahlbündeln zu erhalten;
    wobei die optische Umordnungseinheit (130, 140) einstellbar ist, um eine Umordnung des zweiten Satzes (S2) von Strahlbündeln gegenüber dem ersten Satz (S1) von Strahlbündeln einzustellen; und
    wobei die optische Umordnungseinheit (130, 140) mechanisch verstellbare Spiegel (130) aufweist;
    einem optischen Element (150), das ausgebildet ist, den zweiten Satz (S2) von einem oder mehreren Strahlbündeln durch Bündelung auf die Strahlaufweitungsoptik (161, 162) zu richten, so dass die Strahlaufweitungsoptik (161, 162) von einem dritten Satz (S3) von Strahlbündeln erreicht wird, wobei die Strahlaufweitungsoptik (161, 162) ausgebildet ist, jedes Strahlbündel des dritten Satzes (S3) aufzuweiten, um einen vierten Satz (S4) von aufgeweiteten Strahlbündeln zu erhalten; und
    einer Abbildungsoptik (170), die ausgebildet ist, den vierten Satz (S4) von aufgeweiteten Strahlbündeln auf die Bildfläche (190) abzubilden.

2.  Optische Vorrichtung nach Anspruch 1, umfassend
    eine Quelle (110) für jedes Strahlbündel des ersten Satzes (S1) von Strahlbündeln, aus der das jeweilige Strahlbündel auf die optische Umordnungseinheit (130, 140) trifft.

3.  Optische Vorrichtung (100) nach Anspruch 2, wobei

    die Quelle (110) für jedes Strahlbündel des ersten Satzes (S1) von Strahlbündeln eine Monomodequelle, oder eine Multimodequelle
    aufweist.

4.  Optische Vorrichtung (100) nach Anspruch 3, die für jedes Strahlbündel des ersten Satzes (S1) von Strahlbündeln eine Monomodequelle mit einer GRIN-Linse als Kollimator aufweist.

5.  Optische Vorrichtung (100) nach Anspruch 3, umfassend
    einen Kollimator (120) für jedes Strahlbündel des ersten Satzes (S1) von Strahlbündeln, durch das das jeweilige Strahlbündel des ersten Satzes (S1) von Strahlbündeln in Richtung der optischen Umordnungseinheit (130, 140) tritt.

6.  Optische Vorrichtung (100) nach einem der vorhergehenden Ansprüche, die für jedes Strahlbündel des ersten Satzes (S1) von Strahlbündeln eine Monomodefaser mit einer GRIN-Linse als Kollimator aufweist.

7.  Optische Vorrichtung (100) nach einem der vorhergehenden Ansprüche, wobei das optische Element (150) ausgebildet ist, den zweiten Satz (S2) von Strahlbündeln in einem vorbestimmten Abstand kleiner als einem Zweifachen einer Brennweite ($f_{T,1}$) eines eingangsseitigen optischen Elements (T1) der Strahlaufweitungsoptik (161, 162) vor oder nach, dem eingangsseitigen optischen Element (T1) zu bündeln, so dass sich die Strahlbündel des dritten Satzes (S3) von Strahlbündeln überlagern.

8.  Optische Vorrichtung (100) nach Anspruch 7, wobei
    der vorbestimmte Abstand zwischen einem 0,5- und einem 1,5-fachen der Brennweite ($f_{T,1}$) des eingangsseitigen optischen Elements (T1) beträgt.

9.  Optische Vorrichtung (100) nach Anspruch 7 oder 8, wobei

    der vorbestimmte Abstand zwischen 0,5 und 1,5 mal $f_{T,1}$ + Δ beträgt, mit

$$\Delta = \frac{f_{T1}}{f_{T2}}(f_{T1} + f_{T2}) - f_{T1} = f_{T1}^2 \,/\, f_{T2}$$

wobei $f_{T1}$ die Brennweite ($f_{T,1}$) des eingangsseitigen optischen Elements (T1) und $f_{T2}$ die Brennweite ($f_{T,2}$) des ausgangsseitigen optischen Elements (T2) der Strahlaufweitungsoptik (161, 162) ist, die zusammen ein Teleskop bilden.

10. Optische Vorrichtung nach einem der vorhergehenden Ansprüche 6 bis 9, wobei die Abbildungsoptik (170) einen Durchmesser aufweist, der größer oder gleich einem 1,5-fachen eines Querschnitts eines Strahlbündels des vierten Satzes (S4) von Strahlbündeln ist.

11. Optische Vorrichtung (100) nach einem der vorhergehenden Ansprüche, wobei das optische Element (150) als ein- oder mehrstufige refraktive Optik und/oder als reflektive Optik ausgeführt ist.

12. Optische Vorrichtung (100) nach einem der vorigen Ansprüche, umfassend Lagerungen, über die die mechanisch verstellbaren Spiegel (130) linear beweglich sind.

13. Optische Vorrichtung nach einem der vorhergehenden Ansprüche, wobei
die optische Umordnungseinheit (130, 140) mechanische und/oder piezoelektrische und/oder magnetisch ansteuerbare Stellelemente aufweist.

14. Optische Vorrichtung (100) nach einem der vorhergehenden Ansprüche, wobei die optische Umordnungseinheit (130, 140) ausgebildet ist, die Umordnung weglängenerhaltend zu erzielen, so dass jedes Strahlbündel des ersten Satzes (S1) von Strahlbündeln bei einem Durchlaufen der optischen Umordnungseinheit (130, 140), um ein Strahlbündel des zweiten Satzes (S2) von Strahlbündeln zu werden oder dazu beizutragen, eine Wegstrecke zurücklegt, die unabhängig von einer Einstellung der Umordnung ist.

15. Optische Vorrichtung (100) nach Anspruch 12 oder 13, wobei
die optische Umordnungseinheit (130, 140) einen entlang eines Strahlenganges der optischen Vorrichtung (100) hinter den verstellbaren Spiegeln (130) angeordneten starren Spiegel (140) aufweist.

16. Optische Vorrichtung (100) nach einem der vorhergehenden Ansprüche, wobei die optische Umordnungseinheit (130, 140) ausgebildet ist, den ersten Satz (S1) von zu der Strahlrichtung parallelen Strahlbündeln unter Beibehaltung der Parallelität zueinander und zu der Strahlrichtung so umzuordnen, so dass der zweiten Satz (S2) von Strahlbündeln zu der Strahlrichtung parallel ist.

17. Optische Vorrichtung (100) nach einem der vorhergehenden Ansprüche, wobei die Strahlaufweitungsoptik (161, 162) als refraktives Teleskop und/oder als reflektives Teleskop ausgeführt ist.

18. Optische Vorrichtung (100) nach einem der vorhergehenden Ansprüche, wobei die Strahlaufweitungsoptik mittels jeden Strahlbündels des vierten Satzes (S4) von Strahlbündeln die Abbildungsoptik (170) zu mehr als 50% ausleuchtet.

**Claims**

1. An optical device (100) for imaging a first, object-side set (S1) of mutually parallel bundles of beams onto an image surface, comprising

an optical beam expansion unit (161, 162);
an optical rearrangement unit (130, 140) configured to rearrange the first set (S1) of mutually parallel bundles of beams while maintaining mutually parallelism so as to obtain a second set (S2) of mutually parallel bundles of beams;
wherein the optical rearrangement unit (130, 140) may be controlled to set rearrangement of the second set (S2) of bundles of beams as compared to the first set (S1) of bundles of beams; and
wherein the optical rearrangement unit (130, 140) comprises mechanically adjustable mirrors (130);
an optical element (150) configured to direct the second set (S2) of one or more bundles of beams onto the optical beam expansion unit (161, 162) by means of bundling, so that the optical beam expansion unit (161, 162) is reached by a third set (S3) of bundles of beams, the optical beam expansion unit (161, 162) being configured to expand each bundle of beams of the third set (S3) so as to obtain a fourth set (S4) of expanded bundles of beams; and

an optical imaging unit (170) configured to image the fourth set (S4) of expanded bundles of beams onto the image surface (190).

2. The optical device as claimed in claim 1, including
a source (110) for each bundle of beams of the first set (S1) of bundles of beams, from which the respective bundle of beams impinges upon the optical rearrangement unit (130, 140).

3. The optical device (100) as claimed in claim 2, wherein

the source (110) for each bundle of beams of the first set (S1) of bundles of beams comprises
a monomode source or
a multimode source.

4. The optical device (100) as claimed in claim 3, comprising, for each bundle of beams of the first set (S1) of bundles of beams, a monomode source comprising a GRIN lens as a collimator.

5. The optical device (100) as claimed in claim 3, including
a collimator (120) for each bundle of beams of the first set (S1) of bundles of beams through which the respective bundle of beams of the first set (S1) of bundles of beams passes in the direction of the optical rearrangement unit (130, 140).

6. The optical device (100) as claimed in any of the previous claims, comprising, for each bundle of beams of the first set (S1) of bundles of beams, a monomode fiber comprising a GRIN lens as a collimator.

7. The optical device (100) as claimed in any of the previous claims, wherein
the optical element (150) is configured to bundle the second set (S2) of bundles of beams at a predetermined distance, which is smaller than double a focal length ($f_{T,1}$) of an input-side optical element (T1) of the optical beam expansion unit (161, 162) in front of or behind the input-side optical element (T1), so that the bundles of beams of the third set (S3) of bundles of beams superimpose one another.

8. The optical device (100) as claimed in claim 7, wherein
the predetermined distance amounts to between 0.5 and 1.5 times the focal length ($f_{T,1}$) of the input-side optical element (T1).

9. The optical device (100) as claimed in claims 7 or 8, wherein

the predetermined distance amounts to between 0.5 and 1.5 times $f_{T,1} + \Delta$, with

$$\Delta = \frac{f_{T1}}{f_{T2}}(f_{T1} + f_{T2}) - f_{T1} = f_{T1}^2 / f_{T2}$$

wherein $f_{T1}$ is the focal length ($f_{T,1}$) of the input-side optical element (T1), and $f_{T2}$ is the focal length ($f_{T,2}$) of the output-side optical element (T2) of the optical beam expansion unit (161, 162), which together form a telescope.

10. The optical device as claimed in any of claims 6 to 9, wherein the optical imaging unit (170) comprises a diameter larger than or equal to 1.5 times a cross-section of a bundle of beams of the fourth set (S4) of bundles of beams.

11. The optical device (100) as claimed in any of the previous claims, wherein
the optical element (150) is configured as a one- or multi-stage refractive optical element and/or as a reflective optical unit.

12. The optical device (100) as claimed in any of the previous claims, including
bearings by means of which the mechanically adjustable mirrors (130) are linearly moveable.

13. The optical device as claimed in any of the previous claims, wherein
the optical rearrangement unit (130, 140) comprises mechanical and/or piezoelectric and/or magnetically drivable actuating elements.

**14.** The optical device (100) as claimed in any of the previous claims, wherein
the optical rearrangement unit (130, 140) is configured to achieve rearrangement such that distances covered are maintained, so that each bundle of beams of the first set (S1) of bundles of beams, when passing through the optical rearrangement unit (130, 140) so as to become, or contribute to, a bundle of beams of the second set (S2) of bundles of beams, covers a distance that is independent of any setting of the rearrangement.

**15.** The optical device (100) as claimed in claims 12 or 13, wherein
the optical rearrangement unit (130, 140) comprises a rigid mirror (140) arranged, along an optical path of the optical device (100), behind the adjustable mirrors (130).

**16.** The optical device (100) as claimed in any of the previous claims, wherein
the optical rearrangement unit (130, 140) is configured to rearrange the first set (S1) of bundles of beams, that are parallel to the beam direction, while maintaining parallelism with one another and with the beam direction in such a manner that the second set (S2) of bundles of beams is parallel to the beam direction.

**17.** The optical device (100) as claimed in any of the previous claims, wherein
the optical beam expansion unit (161, 162) is configured as a refractive telescope and/or as a reflective telescope.

**18.** The optical device (100) as claimed in any of the previous claims, wherein
the optical beam expansion unit illuminates more than 50% of the optical imaging unit (170) by means of each bundle of beams of the fourth set (S4) of bundles of beams.

**Revendications**

**1.** Dispositif optique (100) pour reproduire un premier ensemble de faisceaux de rayons du côté de l'objet (S1) s'étendant de manière parallèle l'un à l'autre sur une surface d'image, avec

une optique d'élargissement de rayon (161, 162);
une unité de réorganisation optique (130, 140) qui est conçue pour réorganiser le premier ensemble (S1) de faisceaux de rayons de manière parallèle l'un à l'autre tout en maintenant le parallélisme entre eux pour obtenir un deuxième ensemble (S2) de faisceaux de rayons parallèles l'un à l'autre;
dans lequel l'unité de réorganisation optique (130, 140) peut être réglée pour régler une réorganisation du deuxième ensemble (S2) de faisceaux de rayons par rapport au premier ensemble (S1) de faisceaux de rayons; et
dans lequel l'unité de réorganisation optique (130, 140) présente des miroirs déplaçables de manière mécanique (130);
un élément optique (150) qui est conçu pour orienter le deuxième ensemble (S2) d'un ou plusieurs faisceaux de rayons par regroupement sur l'optique d'élargissement de rayons (161, 162), de sorte que l'optique d'élargissement de rayons (161, 162) soit atteinte par un troisième ensemble (S3) de faisceaux de rayons, où l'optique d'élargissement de rayons (161, 162) est conçue pour élargir chaque faisceau de rayons du troisième ensemble (S3) pour obtenir un quatrième ensemble (54) de faisceaux de rayons élargis; et
une optique de reproduction (170) qui est conçue pour reproduire le quatrième ensemble (S4) de faisceaux de rayons élargis sur la surface d'image (190).

**2.** Dispositif optique selon la revendication 1, comportant
une source (110) pour chaque faisceau de rayons du premier ensemble (S1) de faisceaux de rayons, à partir de laquelle le faisceau de rayons respectif arrive sur l'unité de réorganisation optique (130, 140).

**3.** Dispositif optique (100) selon la revendication 2, dans lequel

la source (110) présente pour chaque faisceau de rayons du premier ensemble (S1) de faisceaux de rayons
une source monomode, ou
une source multimode.

**4.** Dispositif optique (100) selon la revendication 3, qui présente, pour chaque faisceau de rayons du premier ensemble (S1) de faisceaux de rayons, une source monomode avec une lentille GRIN comme collimateur.

**5.** Dispositif optique (100) selon la revendication 3, comportant
un collimateur (120) pour chaque faisceau de rayons du premier ensemble (S1) de faisceaux de rayons, à travers lequel passe le faisceau de rayons respectif du premier ensemble (S1) de faisceaux de rayons en direction de l'unité de réorganisation optique (130, 140).

**6.** Dispositif optique (100) selon l'une des revendications précédentes, qui présente, pour chaque faisceau de rayons du premier ensemble (S1) de faisceaux de rayons, une fibre monomode avec une lentille GRIN comme collimateur.

**7.** Dispositif optique (100) selon l'une des revendications précédentes, dans lequel
l'élément optique (150) est conçu pour regrouper le deuxième ensemble (S2) de faisceaux de rayons à une distance prédéterminée inférieure à deux fois une distance focale (/r,i) d'un élément optique du côté de l'entrée (T1) de l'optique d'élargissement de rayons (161, 162) avant ou après l'élément optique du côté de l'entrée (11), de sorte que viennent en chevauchement les faisceaux de rayons du troisième ensemble (S3) de faisceaux de rayons.

**8.** Dispositif optique (100) selon la revendication 7, dans lequel
la distance prédéterminée est comprise entre 0,5 et 1,5 fois la distance focale ($f_{T,1}$) de l'élément optique du côté de l'entrée (T1).

**9.** Dispositif optique (100) selon la revendication 7 ou 8, dans lequel la distance prédéterminée est comprise entre 0,5 et 1,5 fois $f_{T,1} + \Delta$, où

$$\Delta = \frac{f_{T1}}{f_{T2}}(f_{T1} + f_{T2}) - f_{T1} = f_{T1}^2/f_{T2}$$

où $f_{T1}$ est la distance focale ($f_{T,1}$) de l'élément optique du côté de l'entrée (T1) et $f_{T2}$ est la distance focale ($f_{T,2}$) de l'élément optique du côté de la sortie (T2) de l'optique d'élargissement de faisceau de rayons (161, 162), qui forment ensemble un télescope.

**10.** Dispositif optique selon l'une des revendications précédentes 6 à 9, dans lequel l'optique de reproduction (170) présente un diamètre qui est supérieur ou égal à 1,5 fois une section transversale d'un faisceau de rayons du quatrième ensemble (S4) de faisceaux de rayons.

**11.** Dispositif optique (100) selon l'une des revendications précédentes, dans lequel
l'élément optique (150) est réalisé sous forme d'optique réfractive à un ou plusieurs étages et/ou sous forme d'optique réfléchissante.

**12.** Dispositif optique (100) selon l'une des revendications précédentes, comportant
des paliers par l'intermédiaire desquels les miroirs déplaçables de manière mécanique (130) peuvent être déplacés linéairement.

**13.** Dispositif optique selon l'une des revendications précédentes, dans lequel
l'unité de réorganisation optique (130, 140) présente des éléments de réglage mécaniques et/ou piézoélectriques et/ou pouvant être commandés de manière magnétique.

**14.** Dispositif optique (100) selon l'une des revendications précédentes, dans lequel
l'unité de réorganisation optique (130, 140) est conçue pour atteindre la réorganisation de manière à obtenir la longueur de trajet, de sorte que chaque faisceau de rayons du premier ensemble (SI) de faisceaux de rayons parcoure, lors d'un passage à travers l'unité de réorganisation optique (130, 140), pour devenir un faisceau de rayons du deuxième ensemble (S2) de faisceau de rayons ou pour y contribuer, un trajet qui est indépendant d'un réglage de la réorganisation.

**15.** Dispositif optique (100) selon la revendication 12 ou 13, dans lequel l'unité de réorganisation optique (130, 140) présente un miroir rigide (140) disposé le long d'un trajet de faisceau de rayons du dispositif optique (100) derrière les miroirs déplaçables (130).

**16.** Dispositif optique (100) selon l'une des revendications précédentes, dans lequel
l'unité de réorganisation optique (130, 140) est conçue pour réorganiser le premier ensemble (81) de faisceaux de rayons parallèles à la direction des rayons tout en maintenant le parallélisme entre eux et à la direction des rayons, de sorte que le deuxième ensemble (S2) de faisceaux de rayons soit parallèle à la direction des rayons.

17. Dispositif optique (100) selon l'une des revendications précédentes, dans lequel l'optique d'élargissement de rayons (161, 162) est conçue comme télescope réfractif et/ ou comme télescope réflectif.

18. Dispositif optique (100) selon l'une des revendications précédentes, dans lequel l'optique d'élargissement de rayons illumine, au moyen de chaque faisceau de rayons du quatrième ensemble (S4) de faisceaux de rayons, l'optique de reproduction (170) de plus de 50 %.

Fig. 1

Fig. 2

Fig. 3

EP 3 997 509 B1

Fig. 4

Fig. 5

Fig. 6

Fig. 7

EP 3 997 509 B1

Fig. 8

Fig. 9

Fig. 10

EP 3 997 509 B1

**EP 3 997 509 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014300971 A1
- US 6044096 A
- US 6424759 B1

**In der Beschreibung aufgeführte Nicht-Patentliteratur**

- **CRAIN, S. et al.** Individual addressing of trapped 171Yb+ ion qubits using a microelectromechanical systems-based beam steering system. *Applied Physics Letters,* 2014, vol. 1-4, 181115
- **KNOERNSCHILD, C. et al.** MEMS-based optical beam steering system for quantum information processing in two-dimensional atomic systems. *Optics Letters,* 2008, 273-275
- **RICKERT, J.** Simultaneous and individual ion addressing for quantum information processing. Leopold-Franzens-Universität Innsbruck, Institute of Experimental Physics, 2018